# EUROPEAN PATENT SPECIFICATION

(11) **EP 1 983 786 B1**
(45) Date of publication and mention of the grant of the patent: **28.05.2014**
(21) Application number: 07007729.2
(22) Date of filing: 16.04.2007
(51) Int. Cl.: H04W 48/16, H04W 16/32, H04W 36/00, H04W 36/32, H04W 84/04

(54) **Mobile telecommunications network device**
Mobiles Telekommunikationsnetzwerk
Dispositif de réseau de télécommunication mobile

(43) Date of publication of application: 22.10.2008
(73) Proprietor: Nokia Solutions and Networks Oy, 02610 Espoo (FI)
(72) Inventor: Breuer, Volker, Dr., 16727 Bötzow (DE); Gustrau, Jörg, 81549 München (DE)
(74) Representative: Borgström, Markus

(56) References cited:
- EP-A- 1 489 867
- WO-A-01/52569
- US-A1- 2003 026 242

## Description

### I. Technical Field of the Invention

The invention relates to a mobile telecommunications network device comprising a signal processing unit for processing identification information in order to identify a cell detected by user equipment and to a method for identifying a cell of a mobile telecommunication network being measured by the user equipment.

### II. Background of the Invention

In third generation (3G) mobile telecommunication systems, in particular in systems corresponding to the "Universal Mobile Telecommunication System (UMTS)" standard, the coverage in the field is achieved by flexibly scalable cells. Each cell corresponds to the range of an antenna of a base station, wherein the base stations are logical nodes responsible for radio transmission and for reception in one or more cells to and from the user equipment. Such logical nodes are also called "node B", wherein the larger node Bs comprise three antennas each covering a sector of 120 ° of the environment of the node B.

Different environments require a range of different node Bs. The requirements are of a shifting nature, ranging from deployment for a nationwide coverage through indoor coverage in a specific building. Different solutions need to exist for high capacity areas such as mega sites, street sites, hotspot solutions and coverage fill-ins, as well as wide area and road coverage. Depending on the specific circumstances, either a macro node B, micro node B, pico node B or a femto node B may be used.

The output power for a macro node B depends on configuration, but is in the range of 20 to 60 W. The deployed cell radios of a macro node B can be between 2 km and 30 km in several environments, whereas in traditional dense urban cell environments, the cell radius would be in the range of 100 m to 1 km.

The micro node B is a mid-sized alternative when it comes to capacity and output power. The micro node B has an output power which is traditionally in the range of 5 W to 20 W and a typical call radius for micro node B is 100 m to 1 km.

The pico node B is mainly deployed as an indoor solution and can easily be placed at airports, shopping centres and other areas where open space with a lot of people exists. The pico node B output power is traditionally in the range of 100 to 300 mwatt and the cell radius for a pico node B is traditionally between 10 and 200 m.

The concept of a femto node B is somewhat different from that of a pico node B and of a macro and micro node B. The femto node be is targeted at smaller coverage areas, including residences, and is expected to be well suited for the consumer market. The output power of femto node B is typically in the range of 1 to 100 mW and the intended coverage ranges similar to that of a WLAN or WiFi, i.e. tens of meters. A femto node B can be installed by the network operator or possibly, in some cases, installed by the purchaser.

A roaming user having switched on his user equipment unit and having selected a public land mobile network (PLMN) has to select a cell of the selected mobile telecommunication network. The user equipment automatically selects the cell by measuring the signals of different available cells. The cell selection process is described e.g. in 3GGP specification TS 25.304. This process allows the user equipment unit to select a suitable cell where to camp on in order to access available services.

Moreover, in the idle mode, the user equipment unit permanently measures the available cell, and a cell reselection procedure may be performed allowing the user equipment unit to select a more suitable cell and to camp on it. The user equipment unit then attempts to detect, synchronize and monitor intra-frequency and inter-frequency cells as well as cells of different radio access technology (RAT) as so-called inter-RAT cells indicated in the measurement control system information for serving the cell. The measurement activity of the user equipment unit is also controlled by measurement rules defined in the 3GPP specification TS 25.304 allowing the user equipment unit to limit its measurement activity, if certain conditions are fulfilled.
The each serving cell permanently broadcast messages containing so-called broadcast information. The broadcast information comprises a list of neighbouring cells with the used scrambling code and the corresponding code group of the neighbouring cell, a frequency of the neighbouring cell and further information of a cell type of the neighbouring cell. The information related to code group and used scrambling code of an UMTS cell allows to distinguish 512 cells based on corresponding combinations being sufficient for network neighbourhood planning and is hereafter just referred as cell IDs. (Only 32 entries are allowed in the neighbour cell lists.)

According to the common standards and in order to avoid excessive broadcast information, the number of entries in the list of neighbouring cells is restricted to 32 entries for the various types.
The user equipment will monitor only those cells and consider the cell for cell re-selection which are indicated in the broadcast information. The maximum number of cells that need to be supported/measured by the UE is limited to 32 intra-frequency cells, 32 inter-frequency cells on up to 2 additional carriers and 32 inter-RAT cells according to TS25.133. In active mode the neighbour cell information is provided to the UEs on dedicated basis and the maximum size of the list is also fixed to above mentioned values, and these will be reported to the network with the exception that unlisted intra-frequency cells which are detected may also be reported. However, this blind identification is a rather long lasting process (up to 30 seconds per cell) and thus for active mobility handling rather not suited.
US2003026242 A1 discloses a method of identifying a neighbour cell by a user equipment, UE, wherein a serving cell maintains and transmits to the UE a list of neighbour cells together with their frame timing differences relative to the serving cell in order to support a timely reading of neighbour's system info and a fast identification of each neighbour cell in the UE.
If the serving cell is a macro cell covering an area where a large number of femto cells or home cells are installed, the number of home cells within the macro cell may exceed the number of available entries in the list of neighbouring cells. In the connected mode, the user equipment unit is only required to monitor the above noted limited number of 32 cells, i.e. to seek for a limited number of cell IDs. For example in the UMTS standard, the terminal is only able/requested to monitor up to 32 intra-frequency cells including the serving cell and 32 inter-frequency cells including frequency division duplex (FDD) cells with two additional carriers and time division duplex (TDD) cells distributed on up to three TDD carriers and depending on the capability of the user equipment unit, 32 GSM cells distributed on up to 32 GMM carriers. Although this is sufficient for typical network deployments, with the introduction of home based stations or a femto node Bs, the number of neighbour cells increases significantly and the number of 32 cells will no longer be sufficient. The blind identification is only valid for intra-frequency cells and thus would already severely restrict the femto NodeB deployment flexibility and is a rather long lasting process (up to 30 seconds per cell) and thus for active mobility handling rather not suited, especially not for femto cells, where service should be handed over in rather short time.

To define a cell the scrambling code used and code group of a cell are provided in the broadcast comprising a mean to differentiate 512 cells in the DL allowing sufficient network planningand cell distinction. Above mentioned information can be used to identify the cell and just called hereafter identification numbers(IDs). Identification numbers for home cells, a subset of the cell ID set (e.g. cell IDs 200 to 210) is commonly used. A sufficient large number of IDs is used to have high probability that home cells in vicinity of each other use different cell IDs. The overall number of used IDS for the home NodeBs is significantly smaller than 32 to allow still other entries in the neighbour cell broadcast list to maintain mobility towards non-femto cells e.g. micro or adjacent macro cells. Hence, due to the limited number of cell entries, several home cells within one macro cell may have the same entry. With this approach, the number of monitoring cells in the broadcast information can be kept to 32 cells. However, there will be no unique relation for the cell ID as neighbour cell of the macro cell. The ambiguity of the cell ID inhibits handover from the macro cell to the home cell as the macro cell and its serving RNC/core network element is not able to determine the target cell from the comparison against the entry in the neighbour cell list, as each neighbour cell list entry used for the home NodeBs may comprise a set of home NodeBs. Thus, the mobility between macro cell and femto nodeB is disturbed during periods where the user equipment unit is in an active mode. Here and in the following, the term "home cell" covers in particular femto node Bs, but may in general be construed as a cell with a lower range as compared to a high range cell as a macro cell.

Due to this, handover from the macro cell to the home cell is currently not supported. The terminal will remain to the macro base station even if it is in vicinity of the home based station providing a better data transfer rate. Besides the effect of better data trabsfer by the enduser equipment via the femto NodeB it needs also to be noted that especially if the femto NodeB and the macro layer which serves the UE also in close vicinity of the femto cell may lead to undisred interference in the femto NodeB especially if both frequency layers are in close frequency proximity e.g. adjacent carriers. Thus this scenario may not only limit the enduser perception but also significantly harm the data provisioning by the femto NodeB. The home cell will only be selected based on the cell selection/cell reselection process performed in the idle mode. As the femto cell is part of the neighbour cell list, contained in one of the IDs reserved for femto cells. Here no reporting takes place, in dependence of the mode the UE is in a cell update may be performed thus having the possibility for the network to have full transparency.

Solving the above mentioned problem in dedicated/connected mode is not possible by just increasing the number of entries in the neighbour cell list and giving each femto cell an individual identification number so that handover or soft handover could be supported because any process preferably works with the legacy terminals being used in the field and since the number of entries in the neighbour cell list is limited to 32 in legacy terminals. Furthermore, such an attempt would cause remarkable signalling load in the macro cell.

### III. Summary of the Invention

In view of the above, the object of the invention is to enhance the cell identification in a mobile telecommunication network.

This may include solving the problem of finding a method for identifying a home cell measured by a user equipment unit although the number of possible home cells exceeds the number of available cell identification numbers.

According to one aspect of the invention, it is proposed to provide a mobile telecommunications network device comprising a signal reception means for receiving at least one message from a user equipment unit, wherein the message comprises identification information identifying a cell of a mobile telecommunication network being measured by the user equipment unit. The mobile telecommunications network device further comprises a signal processing unit for processing the identification information in order to identify the detected cell.

It is proposed that the identification information comprises information relating to a system time of the measured cell. If different home cells are femto node Bs and have e.g. the same cell ID, the cells may nevertheless be identified by their particular system time of the measured cell, if the system time differs between the cells. In particular, each cell may be assigned to a particular time shift in the system time, such that the time shift may be extracted from the cell identification information and that the cell may be identified using the extracted time shift. Here time shift is to be understood as a shift in system time of the femto cell compared to the surrounding macro cell or other overlaying cell. This time shift may be configured in the femto cell upon installation of said femto cell and maintained within certain limits according to the frequency stability requiremnts. The list of said time shifts for all femto NodeBs within an overlaying macro cell may be maintained within said macro cell or in one of the core elements above said macro cell, preferably the RNC. We claim that said time shifts are maintained within a tabular form.

According to a further aspect of the invention, the signal processing unit is configured to determine a difference between the system time of the measured cell and the system time of the signal processing unit in order to identify the detected cell. This renders the cell identification particularly simple since the difference between the two system times is a time independent quantity.

Moreover, it is proposed that the signal processing unit is configured to request the message comprising the information relating to a system time of the measured cell from the user equipment. In particular, the message may be only requested, if a first message received by the user equipment contained identification information being assigned to more than one smaller cells comprised in the larger cell, the user equipment unit being served by the larger cell.

The advantages of the invention are particularly obvious in the case where the larger cell is a macro cell and where the smaller cell is a femto cell, since in the latter case, the number of neighbouring cells may easily exceed the maximum number of available entries in the broadcasted list of neighbouring cells containing the cell identification numbers of neighbouring cells.

Since the frame numbers are kept and stored anyway, the information relating to the system time may comprise in a particularly simple embodiment a frame number. The frame number may be in general a system frame number (SFN) and may also be a connection frame number (CFN).

If the signal processing unit is configured to determine a difference between said frame number and a system frame number of the signal processing unit, the time independent quantity for cell identification may be easily achieved.

Since the identification based on time differences requires stabile system times, according to one aspect of the invention, the mobile telecommunications network device comprises a means for synchronizing or maintaining predefined time off-sets the system time of at least some of the cells of the mobile telecommunication network with the system time of the signal processing means.

According to a further aspect of the invention, the invention relates to a method for identifying a cell of a mobile telecommunication network being measured by a user equipment unit. In order to achieve unambiguous cell identification, it is proposed that information relating to a system time of the measured cell is acquired and that the cell is identified first on said information relating to a system time of the measured cell.

One of the principle ideas of the invention is to identify the home cell uniquely not only based on the cell ID, but in addition on the system time shift relative to a macro cell being the serving cell. The system time shift maybe a system frame number time shift. In particular, the home base station (femto node B) of the detected cell should be synchronized with the macro base station (macro node B) and/or should operate based on a fixed off-set.

The UMTS system as such supports a frequency and highly time shift stable operation of the network by requesting high frequency stability, furthermore also synchronous operation is not precluded. To determine the relative time shift between cells, the terminal supports the SFN-CFN observed time difference measurement in the case of intra-frequency cell detection used so far for intra-frequency timing maintained handovers and the more general SFN-SFN time difference measurement in the case of intra-frequency and inter-frequency cell measurement. To determine timing differences between cells.

Since the home base stations or femto cells do not have a stable frequency source and do not require a stable reference for long-term stability, the home base stations of the cells or femto cells may be synchronized to the macro cell without any technical problems. To achieve the frequency stability required by the 3GPP specification, the home base station may log onto the macro based station by periodic listening to macro based station. With this approach, the home base stations are synchronized to the macro base stations and a predetermined system time shift may be held.

However, other ways for network synchronization are possible as well.

If the predetermined time shift between macro and home base station is introduced, this time shift can be used to unambiguously identify the home cell detected by the user equipment.

Due to the above cell identification method, femto node Bs having the same cell identification may exist within one macro node B umbrella cell an can nevertheless be individually identified by the network based on the reported time difference value.

The controlling entity of the umbrella macro cell needs to have a mapping table of femto cell off-sets towards specific femto cells and based on a reported value of the system time off-set, a rounding towards the closest entry in the table will be performed in order to unambiguously identify the femto node B measured by the user equipment unit.

The gained knowledge is used by the network to initiate a handover/soft handover towards the specific identified femto node B corresponding to the cell ID and the reported offset.

According to a further aspect of the invention, it is proposed that the complete number space of the SFN-CFN or SFN-SFN differences will be divided by the number of cells having the same cell ID such that the identifying time shifts are equally distributed over the available number space. Or based on a maximum estimate of the number of femto cells to be supported under one cell ID the maximum number space may be equally divided into time instants corresponding to this maximum ratio, ensuring maximum predefined offset and having most stabe spacing aspect preventing the need of re-timing all femto cells within one ID in case that one additional femto is introduced. Each individual offset for a femto may be configured by the RNC or an other core network element upon intrducing the femto NodeB. The difference between the time shifts being assigned to cells having the same call ID should be larger than run time differences between the corresponding cells and the user equipment unit in order to assure an unambiguous identification. Which can be achieved by above mentioned may femto NodeBs assignment towards one ID determing the maximum number of femtos per ID and minimum offset between femtos corresponding to system frequency/timing stability aspects.

### IV. Brief Description of the Drawings

In the following, a description of the attached drawings shall be given, where a particular embodiment of the invention is described. The description, the drawings and the claims comprise a multitude of features in combination, which shall be considered individually and in further combinations by the skilled person.

Figure 1 is a schematic representation of a mobile telecommunication network with a user equipment unit, a macro cell and a femto cell.

Figure 2 is a schematic representation of a macro cell covering a multitude of femto cells.

### V. Detailed Description of the Embodiment

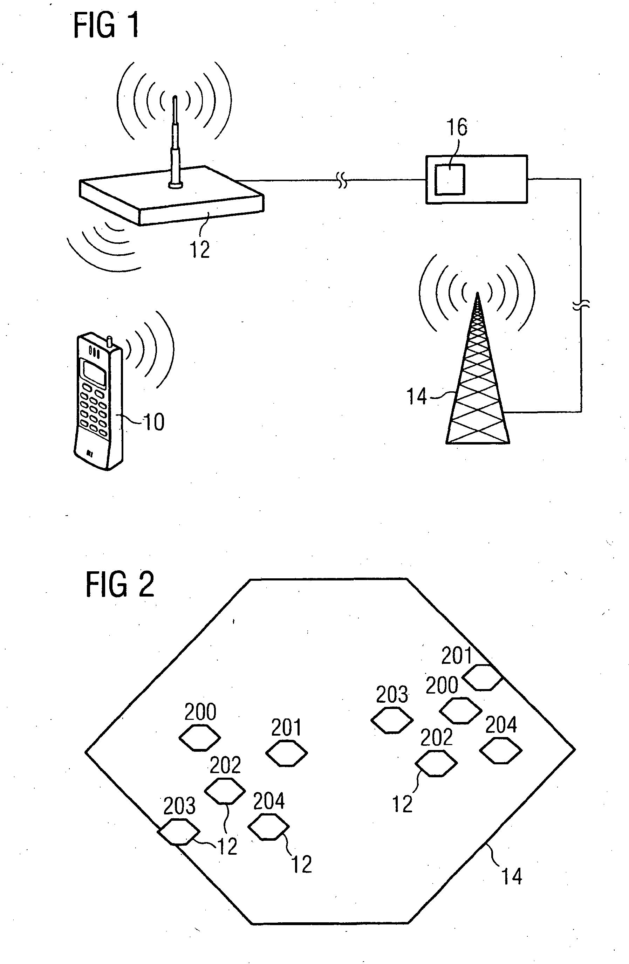

Figure 1 shows schematically a mobile telecommunication network of UMTS type, wherein a user equipment unit 10 embodied as a cellular phone is connected to a universal terrestrial radio access network (UTRAN) via a cell of a macro node B.

The user equipment unit 10 permanently measures available cells of the mobile telecommunication network in order to enable a handover to more suitable cells, if such cells are available. The availability of the additional cells is measured based common signals provided by each NodeB potential candidate are listed in the radio resource control (RRC) messages as described e.g. in the 3GGP specification TS 25.331 from the current serving cell.

In the situation depicted in figure 1, the user equipment unit 10 has a neighbouring femto cell 12 which was indicated in the received RRC signalling message from the macro cell and reports the detected cell via the macro cell 14 to the UTRAN comprising the macro cell 14 and the femto cell 12. Since the detected cell is a femto cell 12, the cell ID reported by the user equipment unit 10 is comprised in a reserved subset of cell IDs (e.g. cell IDs 200 to 210) being assigned to cells of femto type.

The cells within one Radio Network Subsystem (RNS) are controlled by a radio network device embodied as a Radio Network Controller (RNC) providing the macro cell 12 and the femto cell 14 with broadcast information including information on neighbouring cells.

As shown in figure 2, the cell IDs of the femto cells 12 are assigned in a way that neighbouring femto cells 12 have different cell IDs. However, since the macro cell 14 has a very wide range, the total number of femto cells 12 within the range of the macro cell 14 may exceed the number of available cell IDs in the reserved subset of cell IDs. The number of cell IDs is limited due to the limited number of entries in the list of neighbouring cells in the broadcast information. In the case where this limited number is exceeded, it is unavoidable to assign the same cell ID to two or more femto cells 12 within the range of the macro cell 14.

In the example of figure 2, each of the cell IDs 200 to 204 is assigned to two femto cells 12 being sufficiently remote from each other but still being comprised in the range of the macro cell 14. Therefore, the mobile telecommunications network device receiving the message comprising the cell ID from the user equipment unit 10 can not unambiguously decide the signal of which of the femto cells 12 having the same cell ID has been measured by the user equipment unit 10.

In order to resolve the detected femto cell 12 and to unambiguously identify the detected cell in the above case where the cell ID is not sufficient for the purpose of handover, the mobile telecommunications network device requests a further measurement to be performed by the user equipment 10 and to send a corresponding message comprising identification information for identifying the corresponding femto cell 12 being measured by the user equipment unit 10 from the latter. The user equipment unit 10 performes the corresponding measurement and sends a corresponding message comprising information relating to a system time of the measured cell relative to the serving macro cell 14. In the case where the detected cell transmits within the same frequency band as the macro cell 14, such that an intra-frequency measurement is performed, the information relating to the system time of the measured cell may be a connection frame number (CFN-SFN) time difference, whereas in the case of inter-frequency measurements or inter-RAT measurements, the information relating to a system time may be a system frame number (SFN-SFN) time difference.

Upon reception of the additional message of the user equipment, a signal processing unit 16 of the RNC evaluates the reported difference between the frame numbers . The reported difference is different for different femto cells 12 having the same cell ID. Thus each reported value allows to exactly identify the femto cell of which the time difference to the macro cell was measured and thus unambiguously identifies the femto cell 12 within the femto cell ID group

In this way, an unambiguous identification of the detected cell may be performed using the cell ID together with the detected difference in system times.

In order to synchronize the system time of the different cells and to set a predetermined delay/time difference for each of the femto cells 12, the mobile network comprises a means for synchronizing the system time of the femto cells 12 of a mobile telecommunication network with the system time of the signal processing means.

The system time of the femto cells 12 is determined and synchronized in a way that each of the cells is assigned to a specific delay with respect to the SFN of the macro cell 14.

E.g. in the case one wants to support 60 cells by using only four cell IDs (requiring only four entries in the neighbouring cell list out of the total number of 32 entries), the following off-sets should be provided:

| | | |
|---|---|---|
| Home cell 1 | cell ID: 200 | SFN time shift: 327680 chips |
| Home cell 2 | cell ID: 200 | SFN time shift: 983040 chips |
| Home cell 3 | cell ID: 200 | SFN time shift: 1638400 chips |
| ... | ... | ... |
| Home cell 15 | Cell ID: 200 | SFN time shift: 9502720 chips |

In this way, 15 cells with the same cell ID (200) can be equally distributed over the available range of time shifts of SFN-SFN type 1 9830400 chips. The SFN-SFN range 1 covers 9830400 chips which corresponds to 256 frames and thus the spacing of 655360 chips corresponds several frames (10ms equal 38400 chips), which indicates that also from a practical point of view, such a requirement would be feasible, i.e. the synchronization of femto node Bs to macro node Bs needs only seldom be performed or significantly more cells could be mapped towards the same ID. E.g. if the spacing between the SFN time shifts is chosen as38400, 256 different home cells can be mapped on the same cell ID given that distinction would be done by SFN-SFN type 1 measurement.

If the user equipment unit 10 reports the cell ID plus the "SFN-SFN observed time difference" to the macro network, the macro network can uniquely identify the home cell. As the off-sets of the individual femto node Bs are stored in a corresponding list.

The accuracy of the user equipment unit 10 measurement is one chip and the reporting range is 0 to 9830400 chips. The measurement as such enables to distinguish a large number of home cells. However, the minimum time shift has to be larger than several chips to take into account the frequency jitter drift effects between synchronization activities and the 1 to 2 chips jitter due to the exact user equipment unit 10 position with respect to the cells.

It is important to note that the above cell identification scheme does not require any changes to legacy UMTS user equipment units 10 or terminals.

## Claims

1. A mobile telecommunication network device in a mobile telecommunication network, said device being configured to:
a. receive, from a user equipment (10) by said mobile telecommunication network device, information comprising a cell identifier for a cell (12), said cell (12) being a cell within a cell group comprising cells having said cell identifier as cell identifier;
b. receive, from said user equipment (10) by said mobile telecommunication network device, a system time difference, said system time difference relating to a system time of said cell (12) relative to a serving macro cell (14);
c. perform an identification of said cell (12) within said cell group by use of said cell identifier together with said system time difference.

2. Mobile telecommunication network device according to claim 1, further being configured to evaluate a difference between said system time of said cell (12) and compare said system time difference against prior known values in order to unambiguously identify said cell (12).

3. Mobile telecommunication network device according to one of the preceding claims, further comprising an evaluation knowledge concerning said system time difference of femto cells (12) or home cells (12) to macro cells (14).

4. Mobile telecommunication network device according to at least one of the preceding claims, **characterized in that** said system time difference comprises a frame number.

5. Mobile telecommunication network device according to claim 4, **characterized in that** said frame number is a System Frame Number difference.

6. Mobile telecommunication network device according to claim 4, **characterized in that** said frame number is a Connection to system Frame Number difference.

7. Mobile telecommunication network device according to any of claims 4 to 5, further being configured to evaluate said system time difference based on said frame number and a System Frame Number.

8. Mobile telecommunication network device according to at least one of the preceding claims, **characterized by** comprising a means for adjusting fixed offsets in system time of at least some of the cells (12, 14) of the mobile telecommunication network against the system time of said mobile telecommunication network device.

9. Mobile telecommunication network device according to at least one of the preceding claims, **characterized by** comprising a means for synchronizing a system time of at least some cells (12, 14) of the mobile telecommunication network with the system time of the mobile telecommunication network device.

10. Method for identifying cells in a telecommunication network, said method comprising the steps of:
a. receiving, from a user equipment (10) by a mobile telecommunication network device, information comprising a cell identifier for a cell (12), said cell (12) being a cell within a cell group comprising cells having said cell identifier as cell identifier;
b. receiving, from said user equipment (10) by said mobile telecommunication network device, a system time difference, said system time difference relating to a system time of said cell (12) relative to a serving macro cell (14);
c. performing, by said mobile telecommunication network device, an identification of said cell (12) within said cell group by use of said cell identifier together with said system time difference.

## Patentansprüche

1. Mobiltelekommunikationsnetz-Vorrichtung in einem Mobiltelekommunikationsnetz, wobei die Vorrichtung für das Folgende konfiguriert ist:
a. Empfangen von Informationen, welche eine Zellenkennung für eine Zelle (12) umfassen, von einem Benutzergerät (10) durch die Mobiltelekommunikationsnetz-Vorrichtung, wobei die Zelle (12) eine Zelle innerhalb einer Zellengruppe ist, die Zellen umfasst, welche die Zellenkennung als Zellenkennung aufweisen;
b. Empfangen einer Systemzeitdifferenz von dem Benutzergerät (10) durch die Mobiltelekommunikationsnetz-Vorrichtung, wobei sich die Systemzeitdifferenz auf eine Systemzeit der Zelle (12) in Bezug auf eine bedienende Makrozelle (14) bezieht;
c. Durchführen einer Identifikation der Zelle (12) innerhalb der Zellengruppe unter Verwendung der Zellenkennung zusammen mit der Systemzeitdifferenz.

2. Mobiltelekommunikationsnetz-Vorrichtung nach Anspruch 1, welche ferner dafür konfiguriert ist, eine Differenz zwischen der Systemzeit der Zelle (12) auszuwerten und die Systemzeitdifferenz mit früheren bekannten Werten zu vergleichen, um die Zelle (12) eindeutig zu identifizieren.

3. Mobiltelekommunikationsnetz-Vorrichtung nach einem der vorhergehenden Ansprüche, welche ferner Auswertungsvorinformationen umfasst, welche die Systemzeitdifferenz von Femtozellen (12) oder Heimzellen (12) zu Makrozellen (14) betreffen.

4. Mobiltelekommunikationsnetz-Vorrichtung nach mindestens einem der vorhergehenden Ansprüche, **dadurch gekennzeichnet, dass** die Systemzeitdifferenz eine Rahmennummer umfasst.

5. Mobiltelekommunikationsnetz-Vorrichtung nach Anspruch 4, **dadurch gekennzeichnet, dass** die Rahmennummer eine Systemrahmennummern-Differenz ist.

6. Mobiltelekommunikationsnetz-Vorrichtung nach Anspruch 4, **dadurch gekennzeichnet, dass** die Rahmennummer eine Verbindung zu einer Systemrahmennummern-Differenz ist.

7. Mobiltelekommunikationsnetz-Vorrichtung nach einem der Ansprüche 4 bis 5, welche ferner dafür konfiguriert ist, die Systemzeitdifferenz auf der Grundlage der Rahmennummer und einer Systemrahmennummer auszuwerten.

8. Mobiltelekommunikationsnetz-Vorrichtung nach mindestens einem der vorhergehenden Ansprüche, **dadurch gekennzeichnet, dass** sie ein Mittel zum Einstellen fester Verschiebungen der Systemzeit von mindestens einigen der Zellen (12, 14) des Mobiltelekommunikationsnetzes gegenüber der Systemzeit der Mobiltelekommunikationsnetz-Vorrichtung umfasst.

9. Mobiltelekommunikationsnetz-Vorrichtung nach mindestens einem der vorhergehenden Ansprüche, **dadurch gekennzeichnet, dass** sie ein Mittel zum Synchronisieren einer Systemzeit von mindestens einigen Zellen (12, 14) des Mobiltelekommunikationsnetzes mit der Systemzeit der Mobiltelekommunikationsnetz-Vorrichtung umfasst.

10. Verfahren zum Identifizieren von Zellen in einem Telekommunikationsnetz, wobei das Verfahren die folgenden Schritte umfasst:
a. Empfangen von Informationen, welche eine Zellenkennung für eine Zelle (12) umfassen, von einem Benutzergerät (10) durch eine Mobiltelekommunikationsnetz-Vorrichtung, wobei die Zelle (12) eine Zelle innerhalb einer Zellengruppe ist, die Zellen umfasst, welche die Zellenkennung als Zellenkennung aufweisen;
b. Empfangen einer Systemzeitdifferenz von dem Benutzergerät (10) durch die Mobiltelekommunikationsnetz-Vorrichtung, wobei sich die Systemzeitdifferenz auf eine Systemzeit der Zelle (12) in Bezug auf eine bedienende Makrozelle (14) bezieht;
c. Durchführen einer Identifikation der Zelle (12) innerhalb der Zellengruppe unter Verwendung der Zellenkennung zusammen mit der Systemzeitdifferenz durch die Mobiltelekommunikationsnetz-Vorrichtung.

## Revendications

1. Dispositif de réseau de télécommunication mobile dans un réseau de télécommunication mobile, ledit dispositif étant configuré pour :
a. recevoir, en provenance d'un équipement d'utilisateur (10) par ledit dispositif de réseau de télécommunication mobile, des informations comprenant un identificateur de cellule pour une cellule (12), ladite cellule (12) étant une cellule au sein d'un groupe de cellules comprenant des cellules ayant ledit identificateur de cellule en tant qu'identificateur de cellule ;
b. recevoir, en provenance dudit équipement d'utilisateur (10) par ledit dispositif de réseau mobile de télécommunication, une différence d'heure système, ladite différence d'heure système se rapportant à une heure système de ladite cellule (12) par rapport à une macrocellule de desserte (14) ;
c. effectuer une identification de ladite cellule (12) au sein dudit groupe de cellules par l'utilisation dudit identificateur de cellule conjointement avec ladite différence d'heure système.

2. Dispositif de réseau de télécommunication mobile selon la revendication 1, étant en outre configuré pour évaluer une différence entre ladite heure système de ladite cellule (12) et comparer ladite différence d'heure système à des valeurs antérieures connues afin d'identifier sans ambiguïté ladite cellule (12).

3. Dispositif de réseau de télécommunication mobile selon l'une quelconque des revendications précédentes, comprenant en outre une connaissance d'évaluation concernant ladite différence d'heure système de femtocellules (12) ou de cellules d'origine (12) par rapport à des macrocellules (14).

4. Dispositif de réseau de télécommunication mobile selon l'une au moins des revendications précédentes, **caractérisé en ce que** ladite différence d'heure système comprend un numéro de trame.

5. Dispositif de réseau de télécommunication mobile selon la revendication 4, **caractérisé en ce que** ledit numéro de trame est une différence de numéro de trame de système.

6. Dispositif de réseau de télécommunication mobile selon la revendication 4, **caractérisé en ce que** ledit numéro de trame est une connexion à une différence de numéro de trame de système.

7. Dispositif de réseau de télécommunication mobile selon l'une quelconque des revendications 4 à 5, étant en outre configuré pour évaluer ladite différence d'heure système sur la base dudit numéro de trame et d'un numéro de trame de système.

8. Dispositif de réseau de télécommunication mobile selon l'une au moins des revendications précédentes, **caractérisé en ce qu'**il comprend un moyen pour ajuster des décalages fixes dans une heure système d'au moins certaines des cellules (12, 14) du réseau de télécommunication mobile par rapport à l'heure système dudit dispositif de réseau de télécommunication mobile.

9. Dispositif de réseau de télécommunication mobile selon l'une au moins des revendications précédentes, **caractérisé en ce qu'**il comprend un moyen pour synchroniser une heure système d'au moins certaines cellules (12, 14) du réseau de télécommunication mobile avec l'heure système du dispositif de réseau de télécommunication mobile.

10. Procédé d'identification de cellules dans un réseau de télécommunication, ledit procédé comprenant les étapes consistant à :
a. recevoir, en provenance d'un équipement d'utilisateur (10) par un dispositif de réseau de télécommunication mobile, des informations comprenant un identificateur de cellule pour une cellule (12), ladite cellule (12) étant une cellule au sein d'un groupe de cellules comprenant des cellules ayant ledit identificateur de cellule en tant qu'identificateur de cellule ;
b. recevoir, en provenance dudit équipement d'utilisateur (10) par ledit dispositif de réseau de télécommunication mobile, une différence d'heure système, ladite différence d'heure système se rapportant à une heure système de ladite cellule (12) par rapport à une macrocellule de desserte (14) ;
c. effectuer, par ledit dispositif de réseau de télécommunication mobile, une identification de ladite cellule (12) au sein dudit groupe de cellules par l'utilisation dudit identificateur de cellule conjointement avec ladite différence d'heure système.
